# DEMANDE DE BREVET EUROPEEN

(11) **EP 1 359 651 A1**
(43) Date de publication de la demande: **05.11.2003**
(21) Numéro de dépôt: 03362004.8
(22) Date de dépôt: 28.04.2003
(51) Int. Cl.: H02B 1/50, H02G 3/04

(54) **Système de distribution d'une énergie, d'un fluide, d'un flux de données ou de signaux, à module lumineux intégré**

(30) Priorité: 30.04.2002 FR 0205459
(71) Demandeur: Woodsys, 33600 Pessac (FR)
(72) Inventeur: Aschenbroich, Marc, 33610 Cestas (FR)
(74) Mandataire: Fantin, Laurent

(57) **Abrégé**

- L'objet de l'invention est un système constitué d'au moins un dispositif (1,2,3) distributeur d'une énergie, d'un fluide, d'un flux de données ou de signaux à gestion intégrée, caractérisé en ce que ledit dispositif distributeur (1,2,3) comporte, en outre, un module lumineux intégré apte à remplir au moins l'une des fonctions suivantes : repérage d'emplacement, signalisation de disponibilité, indication de la nature de la ou des prestations offertes, indication d'une disponibilité de temps de fourniture ou de solde d'unités de paiement, balisage d'un chemin ou d'un itinéraire à suivre, ledit module lumineux (6) étant commandé pour partie par le dispositif distributeur (1,2,3) et pour partie par un poste de commande centralisée (8) de gestion de la lumière de l'ensemble des dispositifs distributeurs.
- Application à la distribution d'une énergie d'un fluide, d'un flux de données ou de signaux.

## Description

La présente invention se rapporte à la distribution, notamment dans des espaces publics mais également dans des espaces privés, par exemple d'énergie électrique, de flux de données, de son, d'image par l'intermédiaire de dispositifs susceptibles de délivrer à des personnes par exemple une énergie électrique provenant d'un réseau de distribution public ou encore un flux de données ou signaux tel qu'une distribution par câble.

On connaît déjà par exemple pour la distribution électrique sur des espaces publics pour alimenter en électricité des commerces non sédentaires sur une place de marché, des systèmes escamotables offrant plusieurs prises de fournitures d'électricité auxquels sont associés les différents accessoires techniques nécessaires dont la gestion monétique associée.

Il existe également des systèmes encastrés avec une ou plusieurs prises protégées par un couvercle et des systèmes fixes émergeant du sol.

Ces dispositifs présentent divers inconvénients en particulier en période nocturne du fait de leur implantation et de leur destination.

En effet, étant installés notamment sur des espaces publics et souvent dans des zones de passage de piétons et de véhicules, ils représentent en période nocturne à la fois une difficulté de repérage pour l'utilisateur, un obstacle ou une zone à éviter pour les piétons ou véhicules circulant dans les parages et une difficulté de gestion pour les équipes techniques chargées de la maintenance et de l'entretien.

On connaît par ailleurs des systèmes de distribution de données, de communication ou même des simples prises de distribution d'électricité, qui sont munis de témoins lumineux. Cependant, ces témoins ont une simple fonction signalétique qui est asservie à un but unique lié à la fonction distribution ou communication.

Le but de la présente invention est de proposer un système de distribution qui associe à la fonction de distribution un système lumineux multi-fonctionnel, l'ensemble étant susceptible d'être géré d'une manière à la fois souple et sélective.

A cet effet, l'invention a pour objet un système constitué d'au moins un dispositif distributeur d'une énergie, d'un fluide, d'un flux de données ou de signaux à gestion intégrée, caractérisé en ce que ledit dispositif distributeur comporte, en outre, un module lumineux intégré apte à remplir au moins l'une des fonctions suivantes: repérage d'emplacement, signalisation de disponibilité, indication de la nature de la ou des prestations offertes, indication d'une disponibilité de temps de fourniture ou de solde d'unités de paiement, balisage d'un chemin ou d'un itinéraire à suivre, ledit module lumineux étant commandé pour partie par le dispositif distributeur et pour partie par un poste de commande centralisée de gestion de la lumière de l'ensemble des dispositifs distributeurs.

D'autres caractéristiques et avantages du système distributeur de l'invention ressortiront de la description qui va suivre de diverses applications, description donnée à titre d'exemple uniquement et en regard des dessins sur lesquels :
- Figure 1 est un schéma général illustrant un premier mode de mise en oeuvre d'un système distributeur selon l'invention ;
- Figure 2 est un schéma général illustrant une première variante de mode de gestion du système distributeur de la figure 1, et
- Figure 3 illustre une seconde variante de gestion.

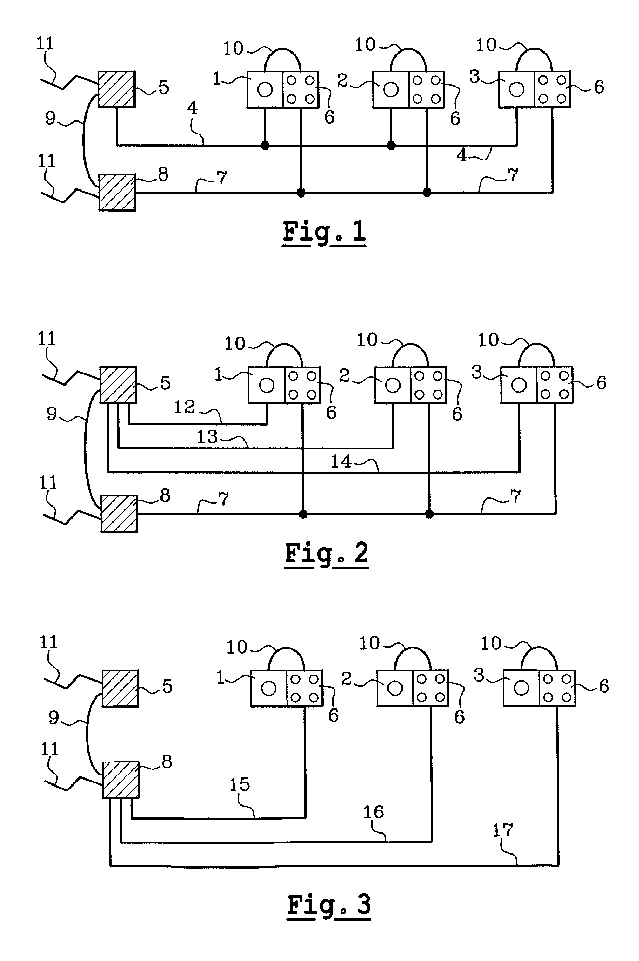

Sur la figure 1, on a représenté schématiquement en 1, 2 et 3, trois dispositifs distributeurs identiques par exemple d'énergie électrique, d'un fluide, d'un flux de données ou de signaux émanant par exemple d'une distribution par câble.

Les dispositifs 1, 2, 3 forment ainsi un système ou réseau de distribution dont les différents points de distribution ou bornes sont reliés chacun à une ligne commune 4 de connexion à un poste 5, situé à distance, de commande et gestion desdites bornes 1,2,3.

La ligne 4 assure l'alimentation en énergie électrique des bornes, la fourniture de l'énergie, le fluide, le flux de données, etc... distribué par les bornes et toute liaison utile au fonctionnement des bornes.

Il est à noter que la gestion de la distribution est assurée, soit dans chaque borne 1, 2, 3 à l'aide d'un module de gestion pouvant regrouper la monétique de paiement et l'électronique de traitement du paiement, des exemples de bornes intégrant un tel module étant décrits dans la demande de brevet FR 01 00399 déposée au nom de la Demanderesse, soit au niveau du poste de commande 5.

Conformément à l'invention, à chaque dispositif ou borne 1, 2, 3 est intégré un module lumineux 6. Tous les modules lumineux 6 sont reliés à une ligne commune 7 de connexion à un poste 8 situé à distance, de commande de gestion des modules 6.

La ligne 7 peut alimenter en énergie électrique les modules lumineux 6, à moins que ces derniers ne le soient via la borne de distribution 1, 2, 3.

La ligne 7 achemine aux modules 6 les signaux de gestion de ces derniers.

Indépendamment de cela et en plus, il est possible de relier (liaison 9) les deux postes 5 et 8, qui généralement seront regroupés localement, pour gérer par exemple les modules lumineux 6 en association avec la fonction distribution. Une telle liaison 9 pourra se faire par un module électronique unique approprié.

Une telle gestion interactive peut également être mise en oeuvre par une liaison 10 établie localement dans chaque borne 1, 2 et 3 ou une partie d'entre elles, entre le module lumineux 6 et le module distribution/fourniture de la borne et/ou le module de gestion de celle-ci, si elle en est équipée.

Il est également à noter que le poste de commande/gestion 5 et/ou le poste de commande/gestion 8 peuvent être télégérés (liaison 11).

Les modules lumineux 6 comportent des moyens d'éclairage-signalisation simples ou multiples qui peuvent être quelconques. Avantageusement, ils seront constitués d'une pluralité de diodes électroluminescentes, dont l'utilisation peut être aisément modulée en vue d'assurer différentes fonctions liées ou non à la fonction distributrice des bornes 1, 2, 3, telles que repérage d'emplacement, signalisation de disponibilité, indication de la nature de la ou des prestations offertes, indication d'une disponibilité de temps de fourniture ou de solde d'unités de paiement, balisage d'un chemin ou d'un itinéraire à suivre, etc...

Un module lumineux 6 à diodes électro-luminescentes peut être utilisé comme aide à la fonction distribution par exemple par l'utilisation d'une partie des diodes, ou par un mode d'éclairement différent (par clignotement par exemple) de ces diodes.

Une pluralité de bornes en réseau telles que les bornes 1, 2, 3 permet un balisage d'un chemin dans une zone, un site, un local, voire un éclairage.

Les modules 6 peuvent, dans un tel contexte, clignoter suivant un programme générant un clignotement successif pour inciter les utilisateurs ou les passants à suivre une direction déterminée.

Les modules lumineux peuvent aussi individuellement clignoter pour signaler une disponibilité ou au contraire une indisponibilité, voire une panne ou un défaut.

Le nombre de dispositifs ou bornes de distribution peut être quelconque et même réduit à un.

De même, la morphologie, structure, agencement de chaque dispositif distributeur peuvent être quelconques et revêtir la forme d'une borne rétractable, d'une borne émergente, d'une borne encastrée.

En chaque point de distribution, plusieurs bornes peuvent être regroupées, associées ou intégrées, avec un module lumineux commun aux bornes et géré en commun.

bans le mode de mise en oeuvre de la figure 1, tous les modules lumineux 6 sont pilotés de la même façon. Néanmoins, certaines modalités de fonctionnement des modules 6 ou de certains d'entre eux peuvent être modifiées via la liaison 10 de certaines bornes.

Par ailleurs, il est à noter que par l'intermédiaire de la liaison 7 et par un processus de commande approprié, par exemple par courant porteur, on peut gérer sélectivement chaque module 6.

bans la variante de la figure 2, les modules de distribution/fourniture des bornes 1, 2, 3 peuvent être alimentés individuellement par une liaison spécifique, respectivement 12, 13, 14, des bornes 1, 2, 3 au poste de gestion 5. Les modules lumineux 6 sont pilotés de la même façon que dans le cas de la figure 1, y compris la gestion sélective par exemple par courant porteur.

Dans la variante de la figure 3, les modules lumineux 6 sont pilotés indépendamment les uns des autres par des liaisons, respectivement 15, 16 et 17 avec le poste de gestion 8. Ces mêmes modules 6 peuvent, comme dans le cas des figures 1 et 2, voir certaines de leurs modalités de fonctionnement modifiées via la liaison locale 10 de certaines bornes.

Bien qu'aucune liaison ne soit représentée sur la figure 3 entre le poste 5 et les bornes 1, 2, 3, une liaison est cependant prévue qui peut être, soit de type de la figure 1, le poste 5 étant relié par une liaison unique aux trois bornes, soit de type de la figure 2, le poste 5 étant relié par trois liaisons en parallèle auxdites bornes.

Le système de distribution selon l'invention peut ainsi, par une grande souplesse de gestion interactive entre les fonctions respectives de distribution et d'éclairage, signalisation de chaque point distributeur, assurer une multitude de fonctions indépendantes, complémentaires, combinées, impliquant un partage des tâches respectives soit dans l'espace, soit dans le temps soit dans les deux, telles qu'aide à la fonction de distribution, signalétique, active ou non, guidage, sécurité des personnes, aide au positionnement des véhicules, aide à la maintenance, animation et aménagement urbain.

## Revendications

1. Système constitué d'au moins un dispositif (1,2,3) distributeur d'une énergie, d'un fluide, d'un flux de données ou de signaux à gestion intégrée, **caractérisé en ce que** ledit dispositif distributeur (1,2,3) comporte, en outre, un module lumineux intégré apte à remplir au moins l'une des fonctions suivantes : repérage d'emplacement, signalisation de disponibilité, indication de la nature de la ou des prestations offertes, indication d'une disponibilité de temps de fourniture ou de solde d'unités de paiement, balisage d'un chemin ou d'un itinéraire à suivre, ledit module lumineux (6) étant commandé pour partie par le dispositif distributeur (1,2,3) et pour partie par un poste de commande centralisée (8) de gestion de la lumière de l'ensemble des dispositifs distributeurs.

2. Dispositif suivant la revendication 1, **caractérisé en ce que** chaque dispositif distributeur (1,2,3) est connecté par une même liaison (4) à un premier poste de commande-gestion (5), cependant que chaque module lumineux (6) est connecté par une même liaison (7) à un second poste de commande-gestion (8).

3. Système suivant la revendication 1, **caractérisé en ce que** chaque dispositif distributeur (1, 2, 3) est connecté par une liaison individuelle (12, 13, 14) à un premier poste de commande-gestion (5), cependant que chaque module lumineux (6) est connecté par une même liaison (7) à un second poste de commande-gestion (8).

4. Système suivant la revendication 1, **caractérisé en ce que** chaque dispositif distributeur (1, 2, 3) est connecté à un premier poste de commande-gestion (5), soit par une même liaison (4), soit par une liaison individuelle (12, 13, 14), cependant que chaque module lumineux (6) est connecté à un second poste de commande-gestion (8) par une liaison individuelle (15, 16, 17).

5. Système suivant l'une des revendications 2 à 4, **caractérisé en ce qu'**une gestion interactive est établie localement dans tout ou partie des dispositifs-distributeurs (1, 2, 3) par une liaison (10) entre le module lumineux (6) et lesdits dispositifs distributeurs.

6. Système suivant l'une des revendications 2 à 5, **caractérisé en ce qu'**une liaison (9) est établie entre lesdits premier (5) et second (8) postes de commande-gestion, notamment par un module électronique unique associé.

7. Système suivant l'une des revendications 2 à 6, **caractérisé en ce que** le premier poste de commande-gestion (5) et/ou le second poste de commande-gestion (8) sont télégérés (11).

8. Système suivant l'une des revendications 1 à 7, **caractérisé en ce que** les modules lumineux (6) sont commandés par une commande sélective par liaison unique (7), notamment une commande par courant porteur.

9. Système suivant l'une des revendications 1 à 8, **caractérisé en ce que** plusieurs dispositifs distributeurs (1, 2, 3) sont regroupés, associés ou intégrés, avec un module lumineux (6) commun.

10. Système suivant l'une des revendications 1 à 9, **caractérisé en ce que** les modules lumineux (6) comprennent des diodes électro-luminescentes dont éventuellement certaines sont utilisables comme aide à la fonction distribution des dispositifs distributeurs (1, 2, 3).
